# EUROPÄISCHE PATENTSCHRIFT

(11) **EP 2 080 564 B1**
(45) Veröffentlichungstag und Bekanntmachung des Hinweises auf die Patenterteilung: **28.08.2019**
(21) Anmeldenummer: 08022063.5
(22) Anmeldetag: 18.12.2008
(51) Int. Cl.: B05D 5/00, C23C 22/18, C23C 22/44, C09D 5/00, C09D 5/08

(54) **Verfahren zum Beschichten eines verzinkten oder legierungsverzinkten Stahlbandes sowie ein verzinktes oder legierungsverzinktes Stahlband mit einer Beschichtung, die nach dem Verfahren erhältlich ist, zur Verbesserung des Umformverhaltens**
Method for coating a galvanised or alloy galvanised steel band, and a galvanised or alloy galvanised steel band with a coating obtained by the method for improving deformation behaviour
Procédé d'application d'un revêtement sur une bande en acier galvanisé ou en alliage galvanisé et la bande en acier galvanisé ou en alliage galvanisé ayant un revêtement obtenu par le procédé en vue de l'amélioration du comportement à la déformation

(30) Priorität: 19.12.2007 DE 102007061109
(43) Veröffentlichungstag der Anmeldung: 22.07.2009
(73) Patentinhaber: Voestalpine Stahl GmbH, 4020 Linz (AT)
(72) Erfinder: Fleischanderl, Martin, 4061 Rainbach i. M. (AT); Rathmayr, Gernot, 4614 Marchtrenk (AT)
(74) Vertreter: HGF Europe LLP

(56) Entgegenhaltungen:
- EP-A1- 0 949 353
- EP-A1- 1 205 580
- EP-A1- 1 426 466
- EP-A1- 1 847 633
- WO-A1-99/24638
- WO-A1-2006/076457
- WO-A1-2006/134117
- WO-A1-2008/034449
- WO-A2-99/29927
- WO-A2-02/070781
- US-A- 5 700 525
- US-A- 5 772 740
- GLEMSER O ET AL: "Über Molybdänblau", ZEITSCHRIFT FÜR ANORGANISCHE UND ALLGEMEINE CHEMIE, vol. 264, January 1951 (1951-01), pages 17-33, XP055574533, Verlag GmbH & Co. KGaA, Weinheim [DE] DOI: 10.1002/zaac.19512640104

## Beschreibung

Die Erfindung betrifft eine Behandlungslösung zum Beschichten eines verzinkten bzw. legierungsverzinkten Stahlbandes, ein Verfahren zum Aufbringen desselben sowie ein verzinktes oder legierungsverzinktes Stahlband mit einer Beschichtung erhalten aus der Behandlungslösung zur Verbesserung des Umformverhaltens.

Es ist bekannt, Metallbänder, die einer Umformung und insbesondere einem Tiefziehprozess unterworfen werden, noch beim Hersteller einer Beölung zu unterwerfen. Eine derartige Ölschicht ist für die Dauer des Transports zudem ein Korrosionsschutz für die Bandoberfläche. Ohne derartige Ölschichten auf dem Band ist eine qualitativ hochwertige Umformung nicht möglich.

Der Nachteil derartiger herkömmlicher Ölbeschichtungen ist jedoch, dass das Kaltband nach der Umformung gereinigt werden muss, um eine für nachfolgende Lackierungen taugliche Oberfläche zu schaffen. Zudem ist die Verwendung von Ölen aus Umweltgründen nachteilig.

Um solche Nachteile zu überwinden und trotzdem eine gute Schmierwirkung zu erzielen wurde schon versucht, Wachse in Schichten von 1 bis 2 µm schmelzflüssig aufzubringen. Bei derartigen Beschichtungen ist jedoch von Nachteil, dass diese nach dem Umformen ebenfalls wieder entfernt werden müssen, da sie nicht überlackierbar sind.

Zudem sind aus der EP 0 947 519 Systeme auf Basis von Schwefel bekannt, welche jedoch keinen Korrosionsschutz bieten.

Aus der EP 0 438 607 B1 ist es bekannt, ein Bandmaterial mit einem festen Schmiermittel zu beschichten. Dieses feste Schmiermittel wird chemisch praktisch nicht definiert sondern nur über gewünschte Eigenschaften. So soll dieses Schmiermittel im Bereich zwischen 48° und 100°C schmelzen und zumindest gesättigte Ester enthalten. Dieses feste Schmiermittel soll mit einem Beschichtungsgewicht von mehr als 0,22 g/m² aufgebracht sein und eine Nadelpenetrationshärtezahl im Bereich von 9 bis 250 aufweisen. Zudem soll sich dieses Schmiermittel mit alkalischen Lösungen abwaschen lassen.

Aus der FR 2 488 676 ist eine Ersatzsubstanz für Öl bekannt, die aus einer wässrigen Lösung von Glykolen, Polyoxymethyl, Polyoxyethyl, Polyurethan oder wasserlöslichen Polyestern bestehen soll.

Weiterhin ist ein schmiermittelbehandeltes Metallblech zur Pressverformung bekannt, welches einen Schmierfilm besitzt, der aufschmelzbar ist und in einer harzförmigen Schicht dispergiert ist. Als Dispersionsphase für das Schmiermittel sollen sich Materialien eignen, die bei gewöhnlichen Temperaturen in festem oder halbfestem Zustand vorliegen, wie z. B. Wachse, höhere Fettsäuren, Acrylsäuren, Methacrylsäuren, Ester höherer Fettsäuren, Monopolymere oder Mischpolymere, wobei als Dispersionsmedium ein wasserlösliches oder in Wasser dispergierbares Harz vorhanden sein soll. Diese wasserlöslichen Harze sollen vorzugsweise wasserlösliche Polyacrylsäure oder Polymethacrylsäure sein.

Aus der US 6,486,102 B1 ist ein weiteres Schmiermittel für Bleche bekannt, die einem Umformschritt unterzogen werden sollen, wobei dieses Schmiermittel gute tribologische Eigenschaften besitzen soll und sich trocken anfühlende Bleche erzielt, wobei kein erneutes Ölen vor einem Umformschritt notwendig ist.

Aus der DE 199 23 084 A1 ist ein chromfreies Korrosionsschutzmittel und Korrosionsschutzverfahren bekannt, bei dem eine dünne organische Schicht auf Oberflächen von Stahl, metallisch beschichtetem Stahl sowie Aluminium ausgebildet werden soll. Als wesentliche Komponenten sollen Hexafluoranionen bestimmter Elemente, Phosphorsäure, Kobalt-, Nickel-, Palladium-, Eisen-, Mangan-, Molybdän- oder Wolfram-Verbindungen, ein wasserlösliches oder wasserdispergierbares organisches Polymer, sowie Organophosphonsäure und weitere Hilfs- und Zusatzstoffe enthalten sein. Diese organische Beschichtung kann zudem ggf. Additive zur Verbesserung des Umformverhaltens enthalten, insbesondere wachsbasierte Derivate auf Basis von natürlichen oder synthetischen Wachsen.

Die Behandlungslösung zur Erzeugung einer Beschichtung auf einem verzinkten bzw. legierungsverzinkten Stahlband hat eine Schmierwirkung so hoch, dass auf andere Schmiermittel bei der Umformung verzichtet werden kann und die überlackierbar und umweltverträglich ist und eine entsprechende Beschichtung auf dem Stahlband hinterlässt.

Es ist eine Aufgabe der Erfindung, ein Verfahren zum Beschichten eines verzinkten bzw. legierungsverzinkten Stahlbandes zu schaffen, mit dem eine Beschichtung erzielt wird, die eine für eine Umformung ausreichende Schmierwirkung und einen guten Korrosionsschutz ermöglicht und welche überlackierbar und umweltverträglich ist.

Die Aufgabe wird mit einem Verfahren mit den Merkmalen des Anspruchs 1 gelöst.

Vorteilhafte Weiterbildungen sind in Unteransprüchen gekennzeichnet.

Darüber hinaus ist eine Aufgabe der Erfindung, ein verzinktes bzw. legierungsverzinktes Stahlband mit einer ölfreien Beschichtung, erhalten nach dem Verfahren des Anspruchs 1, zu schaffen, bei dem die Beschichtung ein gutes Umformverhalten bei sehr gutem Korrosionsschutz sicherstellt und vor weiteren Beschichtungsschritten nicht entfernt werden muss.

Die Aufgabe wird mit einem verzinkten bzw. legierungsverzinkten Stahlband mit den Merkmalen des Anspruchs 10 gelöst.

Des Weiteren ist eine Aufgabe der Erfindung, ein Verfahren zur Herstellung eines nicht ebenen Bauteils aus verzinktem oder legierungsverzinktem Stahl, erhalten aus dem Metallband nach Anspruch 10, zu schaffen.

Die Aufgabe wird mit einem Verfahren mit den Merkmalen des Anspruchs 11 gelöst.

Erfindungsgemäß wird Öl als Beschichtungsmedium zur Sicherstellung der Umformung durch eine Kombination aus einem oder mehreren natürlichen oder künstlichen Wachsen und einer anorganischen oder organischen Matrix (Anionenmatrix) substituiert.

Die Wachskomponenten bilden mit einem Anionenkomplex ein wässriges System. Das wässrige System bildet einen sauren pH-Wert zwischen 1,5 und 3,5. Das wässrige System bildet nach dem Aufbringen durch Tauchen und Quetschen oder durch Rollcoaterprozesse nach einem einfachen Trocknungsschritt eine stabile korrosionsschützende Passivschicht auf der Kaltbandoberfläche. Die komplex gebundenen Wachspartikel in der anorganischen Matrix unterstützen dabei die Korrosionsschutzwirkung. Bei der Umformung des Kaltbandstreifens wird die erforderliche Schmierleistung durch die Wachspartikel gewährleistet.

Die Schichtdicke beträgt hierbei etwa 1 µm, wobei die wässrige Lösung bei Trocknungstemperaturen von maximal 60°C getrocknet wird. Hierfür sind nur einfache Trocknertechnologien notwendig. Die Beschichtung fühlt sich nach dem Trocknen nicht schmierig oder wachsartig an und lässt sich im Gegensatz zu Öl auch nicht durch einfachen Kontakt abreiben oder übertragen.

Vorzugsweise beträgt der pH-Wert ≤ 3,5. Der Reibungsbeiwert ist < 0,15, wobei die Umformleistung vergleichbar mit 1,5 g/m² Umformöl ist.

Die erfindungsgemäße Beschichtung ermöglicht eine gute Überlackierbarkeit für Pulver- und KT-Lacksysteme. Zudem ist das Beschichtungssystem chromfrei und auch insofern unkritisch.

Die wässrige Behandlungslösung enthält ein gelöstes oder dispergiertes Wachs und zudem Phosphationen sowie molybdänhaltige Oxo-Anionen oder Mangan (II)-Ionen und molybdänhaltige Oxoanionen, wobei das Molybdän eine mittlere Oxidationsstufe von +4 bis kleiner als +6 aufweist.

Zusätzlich können weitere organische Polymere die keine Wachse darstellen enthalten sein. Diese weiteren Polymere sind beispielsweise Polymere oder Copolymere polymerisierbarer Carbonsäuren, vorzugsweise ausgewählt aus Acrylsäure, Methacrylsäure, Maleinsäure und deren alkoholischen Ester mit 1 bis 6 Kohlenstoffatomen.

Zudem können Zinkionen, Nickelionen, Titanionen, Silizium in Form von Siliziumverbindungen oder Fluoridionen in freier oder gebundener Form enthalten sein. Beispielsweise können Titanionen und Fluoridionen auch in Form von Hexafluorotitanationen enthalten sein.

Als weitere Bestandteile können nicht ionische Tenside enthalten sein. Erfindungsgemäß können Polyethylenwachs, oxidierte Polyethylenwachse, Karnaubawachs oder andere natürliche oder synthetische Wachse und deren Mischungen verwendet werden.

Die molybdänhaltige Oxo-Anionen oder molyvdänhaltige Oxo-Anionen und Mangan (II)-Ionen werden in einer Menge von 1 bis 40 g/l eingesetzt, wobei 10 bis 150 g/l Phosphationen und 0,5 g/l bis 10 g/l eines gelösten oder dispergierten Wachses vorhanden sind. Werden weitere Polymere eingesetzt, sind diese in Mengen von 0,01 bis 150 g/l enthalten. Sind weitere Metallionen wie Zinkionen, Nickelionen, Titanionen, Siliziumverbindungen oder Fluoridionen enthalten, sind diese in Mengen von 0,5 bis 30 g/l (Zink und/oder Nickel), 0,5 bis 40 g/l (Titanionen), 0,5 bis 50 g/l (Silizium) und 0,5 bis 100 g/l (Fluoridionen) vorhanden. Nicht ionische Tenside werden in Mengen von 0,001 bis 10 g/l vorgesehen.

Erfindungsgemäß wird ein zu beschichtendes verzinktes bzw. legierungsverzinktes Stahlband für 1 bis 10 Sekunden mit der Behandlungslösung in Kontakt gebracht, wobei die Behandlungslösung eine Temperatur von etwa 20° bis 40°C aufweist. Diese Behandlungslösung wird anschließend ohne Spülung eingetrocknet, wobei die Trocknungstemperatur etwa 50° bis 70°C (Substrattemperatur) beträgt.

Die Menge der Behandlungslösung, die auf das Metallband aufgebracht wird, wird dabei so bemessen, dass nach der Trocknung eine Beschichtungsdicke in einem Bereich von 0,5 bis 2 µm erhalten wird.

Bei der Erfindung ist von Vorteil, dass eine umweltverträgliche Beschichtung mit guten Umform- und Korrosionsschutzeigenschaften erzielt wird, die zudem eine Pulverbeschichtung oder KT-Lackierung erlaubt, ohne vorher aufwändig entfernt worden zu sein. Hierdurch wird in besonders kostengünstiger und umweltfreundlicher Weise ein beschichtetes, verzinktes bzw. legierungsverzinktes Stahlbandes geschaffen. Von besonderem Vorteil ist, dass andere zusätzliche Umformhilfsmittel, z. B. Öl bei der Verwendung der Erfindung überflüssig sind.

## Patentansprüche

1. Verfahren zum Aufbringen einer Beschichtung auf ein verzinktes bzw. legierungsverzinktes Stahlband zur Herstellung von ohne Beölung umformbarem, verzinktem bzw.
legierungsverzinktem Stahlband, wobei man das Stahlband für eine Zeitdauer im Bereich von 1 bis 10 Sekunden mit einer wässrigen, chromfreien Behandlungslösung, die einen pH-Wert im Bereich von 1,5 bis 3,5 aufweist und die
a) 1 bis 40 g/l molybdänhaltige Oxo-Anionen oder
molybdänhaltige Oxo-Anionen und Mangan(II)-Ionen, wobei das Molybdän eine mittlere Oxidationsstufe von +4 bis kleiner als +6 aufweist,
b) 10 bis 150 g/l Phosphationen und
c) 0,5 g/l bis 10 g/l eines gelösten oder dispergierten Wachses enthält,
in Kontakt bringt, wobei die Behandlungslösung eine Temperatur im Bereich von 20 bis 40 °C aufweist, und danach die auf dem verzinkten bzw. legierungsverzinkten Stahlband aufgebrachte Behandlungslösung ohne Spülung eintrocknet.

2. Verfahren nach Anspruch 1, **dadurch gekennzeichnet, dass** die Behandlungslösung zusätzlich 0,01 bis 150 g/l eines weiteren organischen Polymers in gelöster oder dispergierter Form enthält.

3. Verfahren nach Anspruch 2, **dadurch gekennzeichnet, dass** das weitere organische Polymer ausgewählt ist aus Polymeren oder Copolymeren polymerisierbarer Carbonsäuren, vorzugsweise ausgewählt aus Acrylsäure, Methacrylsäure, Maleinsäure und deren Estern mit Alkoholen mit 1 bis 6 C-Atomen.

4. Verfahren nach einem oder mehreren der Ansprüche 1 bis 3, **dadurch gekennzeichnet, dass** die Behandlungslösung zusätzlich eine oder mehrere der folgenden Komponenten enthält:
0,5 bis 30 g/l Zinkionen,
0,5 bis 30 g/l Nickelionen,
0,5 bis 40 g/l Titanionen,
0,5 bis 50 g/l Silicium in Form von Siliciumverbindungen,
0,5 bis 100 g/l Fluoridionen in freier oder gebundener Form.

5. Verfahren nach Anspruch 4, **dadurch gekennzeichnet, dass** die Behandlungslösung Titanionen und Fluoridionen in Form von Hexafluorotitanationen enthält.

6. Verfahren nach einem oder mehreren der Ansprüche 1 bis 5, **dadurch gekennzeichnet, dass** die Behandlungslösung zusätzlich 0,001 bis 10 g/l nichtionische Tenside enthält.

7. Verfahren nach einem oder mehreren der Ansprüche 1 bis 6, **dadurch gekennzeichnet, dass** das Wachs ausgewählt ist aus Polyethylenwachs, oxidiertem Polyethylenwachs, Carnaubawachs, anderen natürlichen oder synthetischen Wachsen, und deren Mischungen.

8. Verfahren nach einem oder mehreren der vorhergehenden Ansprüche, **dadurch gekennzeichnet, dass** man die auf dem verzinkten bzw. legierungsverzinkten Stahlband aufgebrachte Behandlungslösung bei einer Temperatur im Bereich von 50 bis 70 °C (Substrattemperatur) eintrocknet.

9. Verfahren nach einem oder mehreren der Ansprüche 1 bis 8, **dadurch gekennzeichnet, dass** man auf das verzinkte bzw. legierungsverzinkte Stahlband eine solche Menge an Behandlungslösung aufbringt, das man nach dem Eintrocknen der Behandlungslösung eine Beschichtung auf dem Metallband mit einer Dicke im Bereich von 0,5 bis 2 µm enthält.

10. Metallband aus verzinktem oder legierungsverzinktem Stahl, **dadurch gekennzeichnet, dass** es eine Beschichtung aufweist, die nach einem Verfahren nach einem oder mehreren der Ansprüche 1 bis 9 erhältlich ist.

11. Verfahren zur Herstellung eines nicht ebenen Bauteils aus verzinktem oder legierungsverzinktem Stahl, **dadurch gekennzeichnet, dass** man aus einem Metallband nach Anspruch 10 ein Teil heraustrennt und dieses Teil ohne Beölung umformt.

## Claims

1. A process for applying a coating on a galvanized or alloy galvanized steel strip for the manufacture of a galvanized or alloy galvanized steel strip that may be formed without oiling, wherein the steel strip for a duration in the range of 1 to 10 seconds is brought into contact with an aqueous, chromium-free treatment solution, which has a pH value in the range from 1.5 to 3.5, and which comprises
a) 1 to 40 g/l molybdenum-containing oxo anions or molybdenum-containing oxo anions and manganese(II) ions, wherein the molybdenum has an average oxidation state of from +4 to less than +6,
b) 10 to 150 g/l phosphate ions; and
c) from 0,5 g/l to 10 g/l of a dissolved or dispersed wax,
wherein the treatment solution has a temperature in the range from 20 to 40°C, and thereafter the treatment solution applied to the galvanised or alloy-galvanised steel strip is dried without rinsing.

2. A process according to claim 1, **characterised in that** the treatment solution additionally contains 0.01 to 150 g/l of a further organic polymer in dissolved or dispersed form.

3. A process according to claim 2, **characterized in that** the other organic polymer is selected from polymers or copolymers of polymerizable carboxylic acids, preferably selected from acrylic acid, methacrylic acid, maleic acid and their esters with alcohols of 1 to 6 C atoms.

4. A process according to one or more of claims 1 to 3, **characterized in that** the treatment solution comprises one or more of the following components:
0.5 to 30 g/l zinc ions,
0.5 to 30 g/l nickel ions,
0.5 to 40 g/l titanium ions,
0,5 to 50 g/l silicon in the form of silicon compounds,
0.5 to 100 g/l fluoride ions in free or bound form.

5. A process according to claim 4, **characterized in that** the treatment solution contains titanium ions and fluoride ions in the form of hexafluorotitanate ions.

6. A process according to one or more of claims 1 to 5, **characterized in that** the treatment solution contains 0,001 to 10 g/l of non-ionic surfactants in addition.

7. A process according to one or more of claims 1 to 6, **characterized in that** the wax is selected from polyethylene wax, oxidized polyethylene wax, carnauba wax, other natural or synthetic waxes, and their mixtures.

8. A process according to one or more of the preceding claims, **characterized in that** the coating treatment solution applied to the galvanized or alloy-galvanized steel strip is dried at a temperature in the range of from 50 to 70 °C (substrate temperature).

9. Process according to one or more of claims 1 bis 8, **characterised in that** such an amount of treatment solution is applied onto the galvanised or alloy-galvanized steel strip, that after drying of the treatment solution one obtains, on the metal strip, a coating having a thickness in the range of from 0.5 to 2 µm.

10. Metal strip made of galvanized or alloy galvanized steel, **characterized in that** it has a coating which may be obtained according to a process according to one or more of claims 1 to 9.

11. A process for the manufacture of a non-planar component from galvanized or alloy galvanized steel, **characterized in that** one cuts a part out of a metal strip according to claim 10 and forms this part without oiling.

## Revendications

1. Procédé d'application d'un revêtement sur une bande en acier galvanisée ou galvanisée à l'alliage pour la fabrication d'une bande en acier galvanisée ou galvanisée à l'alliage qui peut être formée sans huilage, dans lequel la bande en acier est mise en contact pendant une durée comprise entre 1 et 10 secondes avec une solution de traitement aqueuse sans chrome, qui présente un pH compris entre 1,5 et 3,5, et qui comprend
a) 1 à 40 g/l d'anions oxo contenant du molybdène ou d'anions oxo et d'ions manganèse(II) contenant du molybdène, le molybdène ayant un niveau moyen d'oxydation de +4 à moins de +6,
b) 10 à 150 g/l d'ions phosphate ; et
c) de 0,5 g/l à 10 g/l d'une cire dissoute ou dispersée,
dans laquelle la solution de traitement a une température dans la plage de 20 à 40°C, et ensuite la solution de traitement appliquée sur la bande d'acier galvanisée ou galvanisée à l'alliage est séchée sans rinçage.

2. Procédé selon la revendication 1, **caractérisé en ce que** la solution de traitement contient en outre 0,01 à 150 g/l d'un autre polymère organique sous forme dissoute ou dispersée.

3. Procédé selon la revendication 2, **caractérisé en ce que** l'autre polymère organique est choisi parmi les polymères ou copolymères d'acides carboxyliques polymérisables, de préférence choisis parmi l'acide acrylique, l'acide méthacrylique, l'acide maléique et leurs esters avec des alcools ayant 1 à 6 atomes de carbone.

4. Procédé selon une ou plusieurs des revendications 1 à 3, **caractérisé en ce que** la solution de traitement comprend un ou plusieurs des composants suivants :
0,5 à 30 g/l d'ions zinc,
0,5 à 30 g/l d'ions nickel,
0,5 à 40 g/l d'ions titane,
0,5 à 50 g/l de silicium sous forme de composés de silicium,
0,5 à 100 g/l d'ions fluorure sous forme libre ou liée.

5. Procédé selon la revendication 4, **caractérisé en ce que** la solution de traitement contient des ions de titane et des ions de fluorure sous forme d'ions d'hexafluorotitanate.

6. Procédé selon une ou plusieurs des revendications 1 à 5, **caractérisé en ce que** la solution de traitement contient en outre 0,001 à 10 g/l de tensioactifs non ioniques.

7. Procédé selon une ou plusieurs des revendications 1 à 6, **caractérisé en ce que** la cire est choisie parmi la cire de polyéthylène, la cire de polyéthylène oxydé, la cire de carnauba, d'autres cires naturelles ou synthétiques, et leurs mélanges.

8. Procédé selon une ou plusieurs des revendications précédentes, **caractérisé en ce que** la solution de traitement de revêtement appliquée sur la bande d'acier galvanisée ou galvanisée à l'alliage est séchée à une température comprise entre 50 et 70 °C (température du substrat).

9. Procédé selon une ou plusieurs des revendications 1 à 8, **caractérisé en ce qu'**une telle quantité de solution de traitement est appliquée sur la bande d'acier galvanisée ou galvanisée par alliage, qu'après séchage de la solution de traitement on obtient, sur la bande métallique, un revêtement ayant une épaisseur comprise entre 0,5 et 2 µm.

10. Bande métallique en acier galvanisé ou galvanisé par alliage, **caractérisée en ce qu'**elle présente un revêtement qui peut être obtenu selon un procédé selon une ou plusieurs des revendications 1 à 9.

11. Procédé de fabrication d'une pièce non plane en acier galvanisé ou galvanisé par alliage, **caractérisé en ce que** l'on découpe une pièce dans une bande métallique selon la revendication 10 et que l'on forme cette pièce sans huilage.
